# NEUE EUROPÄISCHE PATENTSCHRIFT

(11) **EP 1 373 039 B2**
(45) Veröffentlichungstag und Bekanntmachung des Hinweises auf die Entscheidung über den Einspruch: **09.06.2010**
(45) Hinweis auf die Patenterteilung: 08.12.2004
(21) Anmeldenummer: 02702329.0
(22) Anmeldetag: 31.01.2002
(51) Int. Cl.: B60T 13/00

(54) **BREMSKRAFTÜBERTRAGUNGSEINRICHTUNG FÜR EINEN BREMSKRAFTVERSTÄRKER**
BRAKE FORCE TRANSMISSION DEVICE FOR A BRAKE FORCE AMPLIFIER
DISPOSITIF DE TRANSMISSION DE FORCE DE FREINAGE POUR UN SYSTEME D'ASSISTANCE DE FREINAGE

(30) Priorität: 15.02.2001 DE 10107587; 11.09.2001 DE 10144619
(43) Veröffentlichungstag der Anmeldung: 02.01.2004
(73) Patentinhaber: Continental Teves AG & Co. oHG, 60488 Frankfurt (DE)
(72) Erfinder: HARTH, Ralf, 64297 Darmstadt (DE); VON HAYN, Holger, 61118 Bad Vilbel (DE); WAGNER, Wilfried, 35625 Hüttenberg (DE); RITTER, Wolfgang, 61440 Oberursel/Ts. (DE); FEIGEL, Hans-Jörg, 61191 Rosbach (DE); FALLER, Jürgen, 63796 Kahl (DE)
(86) Internationale Anmeldenummer: PCT/EP2002/000977
(87) Internationale Veröffentlichungsnummer: WO 2002/064411

(56) Entgegenhaltungen:
- EP-B1- 0 705 190
- DE-A1- 19 916 579
- US-A- 4 719 842
- US-A- 5 261 313
- US-A- 5 943 937

## Beschreibung

Die Erfindung betrifft eine Bremskraftübertragungseinrichtung für einen Bremskraftverstärker mit einem elastischen Reaktionselement, einem Eingangsglied mit einer zugeordneten Wirkfläche, einem Ausgangsglied mit einer zugeordneten Wirkfläche und mit einem ersten Übersetzungsverhältnis, welches durch ein, in Wirkverbindung mit dem Reaktionselement stehendes Verhältnis der Wirkflächen definiert ist.

Eine Übertragungseinrichtung ist beispielsweise aus dem japanischen Gebrauchsmuster JP-U-61-205858 bekannt. Die Übertragungseinrichtung besitzt ein, auf einer Eingangsseite (oder auf einer Ausgangsseite) angeordnetes, federnd vorgespannte, bewegbares Druckstück, welches durch Flächenverhältnisänderung auf der Eingangsseite (oder auf der Ausgangsseite) eine sprunghafte Steigerung des Verstärkungsverhältnis bei einer vorgegebenen Eingangskraft bewirkt. DE 199 16 579 A1 beschreibt den Oberbegriff des Anspruchs 1.

Die Erfindung geht daher aus von einer Übertragungseinrichtung der sich aus dem Oberbegriff des Anspruchs 1 ergebenden Gattung. Aufgabe der vorliegenden Erfindung ist es, eine Übertragungseinrichtung bereitzustellen, welche mit einer besonders geringen Baugröße einfach in einen Bremskraftverstärker vom Standardtyp integrierbar ist. Es soll folglich ermöglicht werden, die Übertragungseinrichtung nach Wunsch auch in bereits bestehende Bremskraftverstärker einsetzen zu können, ohne teure Neu- oder Änderungskonstruktionen vornehmen zu müssen.

Die Aufgabe wird durch die sich aus dem Anspruch 1, ergebende Merkmalskombination gelöst.

Bei der Lösung nach Anspruch 1 besteht die Erfindung im Prinzip darin, daß durch die Verformung des Reaktionselementes der Schaltring entgegen der Kraft der Feder zum Eingangslied hin solange verschoben wird, bis die auf das Steuergehäuse rückwirkende Fläche des Reaktionselementes um die Ringfläche des Schaltringes vermehrt ist. Hierdurch ergibt sich eine kleinere Wirkfläche am Eingang und damit auch eine Vergrößerung des Übersetzungsverhältnisses der Kräfte. Anders ausgedrückt bedeutet das, daß nach dem Anschlag des Schaltringes an dem Steuergehäuse die auf das Eingangsglied einwirkende Rückwirkung des Ausgangsgliedes vermindert wird. Der Fahrer kann somit bei verminderter Fußkraft den gleichen Bremseffekt erreichen.

Das Federpaket ist, wie weiter unten noch näher erläutert wird, sehr einfach aufgebaut. Das Federpaket ist weiterhin eine in sich abgeschlossene Baueinheit, die beim Zusammenbau des Bremskraftverstärkers einstückig in das Steuergehäuse eingefügt wird. Entsprechendes kann auch für den Schaltring gelten, der zwar einstückig mit dem Federpaket verbunden sein kann vorteilhaft aber eine getrennte Einheit bildet. Der Vorteil dieser Maßnahmen liegt insbesondere darin, in das sowohl das Federpaket als auch der Schaltring in verschiedenen Ausführungsformen am Lager gehalten werden können mit denen dann das Steuergehäuse je nach Bedarf und gewünschtem Verlauf der Verstärkung bestückt wird.

Das Federpaket ist im wesentlichen symmetrisch aufgebaut. Wesentlich dabei ist nur, daß die beiden Halteelemente gegen die Kraft der Feder gegeneinander verschoben werden können. Das Anschlagelement sorgt weiterhin dafür, daß die beiden Halteelemente zu einer Einheit vereint sind und keines der Halteelemente verlorengehen kann. Außerdem ist durch die Wahl der Feder und die Wahl des Abstandes der beiden Halteelemente zueinander die Kraft eindeutig bestimmbar, mit der die beiden Halteelemente zueinander vorgespannt sind.

Das erste Halteelemente kann durch einen, durch das zweite Halteelement hindurch reichenden Ansatz direkt an dem Reaktionselement angreifen. Es ist aber auch denkbar, daß das erste Halteelement nur mittelbar über ein Druckstück auf das Reaktionselement einwirkt. Der Vorteil hiervon ist, daß das Druckstück entsprechend dem Verlauf der gewünschten Verstärkung ausgewählt werden kann. Da auch, wie weiter oben schon erläutert, hinsichtlich des getrennt einfügbaren Schaltringes eine Auswahl möglich ist, läßt sich durch die Kombination des Schaltringes mit einem Druckstück der Verlauf der Kenlinie der Verstärkung weitgehend variieren. Damit kann durch die Wahl des Schaltringes des Druckstücks und des Federelementes das Verstärkungsverhalten des Bremskraftverstärkers in Abhängigkeit von der Eingangskraft weitgehend den jeweiligen Bedürfnissen angepaßt werden. Vorteilhaft ist weiterhin, daß die genannten Elemente nachgerüstet werden können und somit eine Anpassung des bereits in der Serie befindlichen Verstärkers ermöglichen.

Dabei kann der Schaltring mit seiner Innenfläche sowohl durch die Außenfläche des Ansatzes geführt sein, als auch mit seiner äußeren Mantelfläche an der inneren Mantelfläche eines Ansatzes an dem Steuergehäuse. Für den Fall, daß das erste Halteelemente nur mittelbar über ein Druckstück an dem Reaktionselement angreift, ist dann allerdings nur eine Führung des Schaltringes an seiner äußeren Mantelfläche möglich.

Der Schaltringschlägt nicht direkt am Steuergehäuse an, sondern mittelbar über das zweite Halteelement, auf welches er einwirkt. Hierdurch läßt sich der Schaltring sehr einfach ausgestalteten so daß er noch aus einem einfachen zylindrischen Ring besteht. Weiterhin läßt sich durch die Ausgestaltung in sehr einfache Weise eine größere Anschlagfläche erreichen, indem das zweite Halteelement zur Aufnahme einer hinreichend großen Feder ohnedies in radialer Richtung eine größere Erstreckung aufweisen muß.

Eine vereinfachte Herstellung läßt sich auch durch die Merkmalskombination nach Anspruch 4 erreichen. Da der fixierte Ring gleichzeitig als Führung für den Schaltring dienen kann, läßt sich durch eine entsprechende Dimensionierung der inneren Ausnehmung des fixierten Ringes und des äußeren Durchmessers des Schaltringes die Stärke des Schaltringes und damit der Verlauf der Kennlinie der Verstärkung beeinflussen.

Eine weitere Vereinfachung für den Aufbau der erfindungsgemäßen Übertragungseinrichtung läßt sich durch die Maßnahmen nach Anspruch 5 erreichen. Dabei dient das Steuergehäuse gleichzeitig zur axialen Führung für das zweite Halteelement und als Anschlag. Die Wände der Führungsnuten werden somit doppelt ausgenutzt indem sie gleichzeitig zur Führung in Längsrichtung als auch als Anschlag dienen.

Um eine hinreichende Federkraft trotz kleiner Abmessungen zu erreichen, empfiehlt sich in Weiterbildung der Erfindung die Merkmalskombination nach Anspruch 6. Die Feder kann den Verlauf der Kennlinie der Verstärkung beeinflussen, indem die Kennlinie der Feder entsprechend ausgewählt wird. Der Ansatz kann entsprechend den Merkmalen nach Anspruch 10 direkt einstückig mit dem ersten Halteelement verbunden sein. Zur Ersparnis von Material und zur geeigneten Kombination von Werkstoffen kann das Halteelement aber auch mit dem Ansatz vernietet sein.

Ein wichtiger Gesichtspunkt für die Erfindung ist es, daß, wie im Zusammenhang mit Anspruch 8 erläutert, sie in besonders zweckmäßiger Weise in ein geregeltes Bremssystem eingefügt ist. Dies gilt besonders dann, wenn bei dem geregelten Bremssystem die Verteilung der Bremskräfte auf die einzelnen Räder oder Radgruppen in Abhängigkeit von dem Schlupf an den jeweiligen Rad bzw. an den Rädern geregelt ist. Hierdurch wird erreicht, daß mit geringem Aufwand bei geringer Pedalkraft gleichwohl ein hinreichend großer Bremsdruck erzeugt werden kann. Auf der anderen Seite sorgt die geregelte Verteilung der Bremskräfte dafür, daß das Fahrzeug nicht durch Schlupf an einem oder mehreren Rädern aus der Spur gerät.

Der Vorteil der Erfindung beruht im wesentlichen auf folgenden Fakten. Das hier vorliegende Funktionsprinzip beruht im wesentlichen und in einfacher Weise auf einer vorgespannten Feder, die in axialer Wirkungsweise zwischen Ventilkolben und dem Kolben plaziert ist. Dabei sind funktionsbedingte Anschläge vorgesehen, wobei eine direkte Übertragung beim Durchsteuern des Verstärkers sichergestellt ist. Die bevorzugten Konstruktionsmerkmale bestehen im folgenden. Es ist eine in einfacher Weise gefesselte Druckfeder vorgesehen. Es wird ein sehr einfach aufgebautes Federelementes verwendet. Das Steuergehäuse ist mit einem fixierten Ring versehen, welcher sehr einfach als Kraft aufnehmende Scheibe ausgestaltet ist. Dieser fixierte Ring kann sich gegen die Stirnfläche einer Stufenbohrung in dem Steuergehäuse anlegen wobei in die Wand der Stufenbohrung Nuten eingelassen sind, welche gleichzeitig zur Führung, als auch als Anschlag dienen. Mit anderen Worten ist bei der hier beschriebenen Konstruktion folgendes besonders wichtig.

Das hier vorliegende Funktionsprinzip beruht im Wesentlichen, und in einfacher Weise, auf einer vorgespannten Feder, die in axialer Wirkungsweise zwischen Ventilkolben und Ringkolben platziert ist, und mit einigen funktionsbedingten Anschlägen zusammenwirkt, wobei eine direkte Kraftübertragung beim Durchsteuern sichergestellt ist. Besonders hervorzuhebende Konstuktionsmerkmale sind die in einfacher Weise gefesselte Druckfeder(n) (5), und ein preiswertes Kraftübertragungsglied. Ein Steuergehäusebereich (4) hinter der kraftaufnehmenden Scheibe (1) nimmt multifunktional, die Kräfte vom Schaltring (2) auf, und dient gleichzeitig zur Führung der Anschlagscheibe als zweites Halteelement (6) mit Anschlag. Die Anschlagscheibe (6) spannt die Feder vor, leitet die Reaktionskräfte des Ringkolbens (2) an die Feder weiter, und ist Anschlag des Ringkolbens, sowie Übertragungsglied beim Durchsteuern.

Die Erfindung ist besonders wirksam in Verbindung mit einer elektronisch geregelten Bremskraftverteilung, da bei Ausfall des ABS (Antiblockiersystem) in der Regel auch der Ausfall der elektronischen Bremskraftverteilung (EBV) auftritt. In diesem Falle kann der Fahrer den Bremsdruck auf dem steilen Ast der Verstärker-Kennlinie noch gut dosieren. Dies steht im Gegensatz zu Systemen mit Panik-Brems-Funktion wie z. B. Bremsassistent (BA) oder mechanischer Bremsassistent (MBA) , die beim Wechseln in eine unendliche (steile) Kennlinie der Bremskraft-Verstärkung deutlich schwieriger beherrschbar sind.

Zwei Ausführungsbeispiele der Erfindung werden nachfolgend anhand der Zeichnung erläutert. Darin zeigt :
Fig. 1 eine Übertragungseinrichtung gemäß einer ersten Ausführungsform im Schnitt und in herausgebrochener Darstellung,
Fig. 2 in herausgebrochener geschnittener Darstellung einen Schnitt durch das Ausführungsbeispiel nach Fig. 1 in Höhe der Schnittlinie A-A in Fig. 1, und
Fig. 3 ein zweites Ausführungsbeispiel der Erfindung.

Nachstehend wird auf den Aufbau und die Funktion der Übertragungseinrichtung 1 detailliert eingegangen, wobei die grundsätzliche Funktion eines Bremskraftverstärkers wie sie beispielhaft der WO-A-99/26826 zu entnehmen ist, als bekannt vorausgesetzt wird.

Grundsätzlich bekannte Bremskraftverstärker verfügen idealisiert betrachtet über den gesamten Betriebsbereich bis hin zu dem sogenannten Aussteuerungspunkt über ein konstantes Übersetzungsverhältnis, wobei die hervorgerufene Ausgangskraft (Fußkraft und Verstärkungskraft) linear über der Eingangskraft (Fußkraft) ansteigt. Ganz grundsätzlich ist die Übersetzung, welche das Pedalgefühl des Fahrers im wesentlichen beeinflusst, durch das Verhältnis der dem Ausgangsglied zugeordneten Wirkfläche (d4) zu der dem Eingangsglied zugeordneten Wirkfläche (d3) definiert. Für höhere Bremsleistungen, das heißt bei höherem Bremskraftniveau wird es als positiv angesehen, den Fahrer stärker zu unterstützen. Es wird mit anderen Worten ein größeres Übersetzungsverhältnis hervorgerufen, wie es beispielsweise der JP-U-61-205858 zu entnehmen ist.

Eine Übertragungseinrichtung 20 nach der Erfindung umfaßt neben anderen, dem Bremskraftverstärker zuzurechnenden Teilen, welche hier keinen entscheidenden Einfluß haben und deshalb nachstehend nicht beschrieben werden, ein in einem Steuergehäuse 8 mit einem ersten Dichtsitz 21 bewegbar angeordnetes Eingangsglied 22 mit einem Ventilkolben 23 sowie ein Ausgangsglied 24 zur Betätigung eines nicht gezeichneten Hauptbremszylinders. Zwischen dem Eingangsglied 22 und dem Ausgangselement 24 befindet sich ein vorzugsweise scheibenförmiges, und aus Kunststoffwerkstoff oder Gummiwerkstoff bestehendes elastisches Reaktionselement 7, welches allseitig durch Flächen von Teilen der Übertragungseinrichtung 20 umgeben, mit anderen Worten gewissermaßen zwischen beweglichen Wänden gekapselt ist. Das elastische Reaktionselement 7 verhält sich unter Druckbeanspruchung wie ein inkompressibles Fluid nach den Gesetzen der Volumenkonstanz und fungiert gewissermaßen als Mittler zwischen den über das Eingangsglied 22 eingeleiteten Fußkräften und den Bremsreaktionskräften, welche aus dem Fahrzeugbremssystem auf den Fahrzeugführer zurückwirken. Folglich herrscht bei jeder Bremsbetätigungsstellung ein Kraftgleichgewicht an dem Reaktionselement 7.

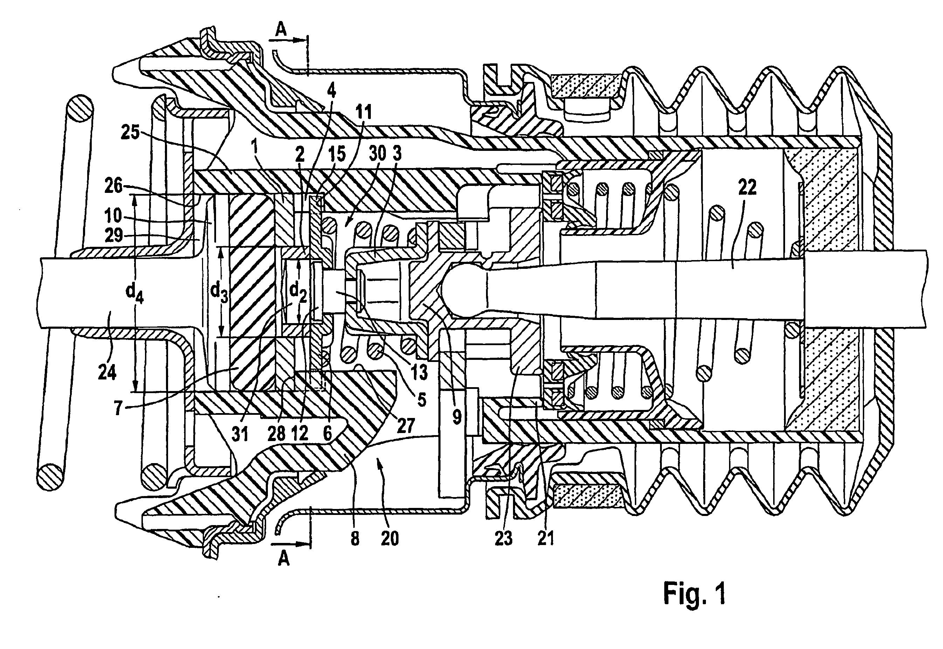

Das Reaktionselement 7 sitzt in einem in Fig. 1 nach links offenen Topf 25, der durch eine erste Bohrung 26 in dem Steuergehäuse 8 und aus einem fixierten Ring 1 gebildet ist, der sich an der Kante 28 einer zweiten Bohrung 27 des Steuergehäuses 8 abstützt. Der Topf 25 besitzt eine Eingangsöffnung 29 in der das, in der Zeichnung vordere Ende, des Ausgangsliedes 24 geführt ist. Das Ausgangsglied 24 geht an seinem in Fig. 1 rechten Ende in einen Teller 10 über, der den Topf 25 verschließt und gegen den die in Fig. 1 nach links weisende Wand des Reaktionselementes 7 anliegt. Nach rechts stützt sich das Reaktionselement 7 gegen den fixierten Ring 1 ab, welcher wiederum an der umlaufenden Kante 28 bzw. Stufe zwischen der ersten Bohrung 26 und der zweiten Bohrung 27 anliegt. Die Fläche für den Teller 10 wird mit dem Wert d4 angegeben. Der fixierte Ring 1 hat innen eine Öffnung, welche mit dem Wert d3 als Fläche der Öffnung angegeben wird. In der Öffnung (d3) ist ein Schaltring 2 geführt, der gegenüber dem fixierten Ring 1 in Längsrichtung des Verstärkers verschiebbar ist. Ein Federelement setzt sich aus einem ersten Halteelement 3, einem zweiten Halteelement 6 und einer Feder 5 zusammen. Die Feder 5 spannt die beiden Halteelemente 3 und 6 gegeneinander vor, so daß sie nur mit einer bestimmten Kraft gegeneinander verschoben werden können. Der maximale Abstand der beiden Halteelemente gegeneinander ist durch einen Anschlag 12 festgelegt, der an einem Ansatz 13 des ersten Halteelementes 3 angeordnet ist.

Das erste Halteelemente 3 ist mit einem Ansatz 13 versehen, der zusammen mit dem Halteelement als ein einziges durchgehendes Stück ausgeformt sein kann. Es ist aber auch sinnvoll, den Ansatz 13, wie in Fig. 1 dargestellt, als Nietteil auszuführen. Hierfür kann das Nietteil aus einem Material mit geeigneter Festigkeit gewählt werden, während das erste Halteelement 3 aus einem formbaren Blech gebildet ist. Am Ende des Nietteiles 13 ist ein Anschlag 12 vorgesehen, welcher als umlaufendet Vorsprung ausgestaltet ist. Durch diesen Anschlag 12 ist sichergestellt, daß sich das zweite Halteelement 6 nur um einen vorgegebenen Abstand von dem ersten Halteelement 3 entfernen kann. Der Ansatz 13 kann bis in den Innenraum des Schaltringes 2 ragen. Wie bei dem vorliegenden Ausführungsbeispiel kann sich aber auch ein Nietteil 13 an ein Druckstück 31 anschließen, welches durch den Schaltring 2 ragt und auf das Reaktionselement 7 einwirkt.

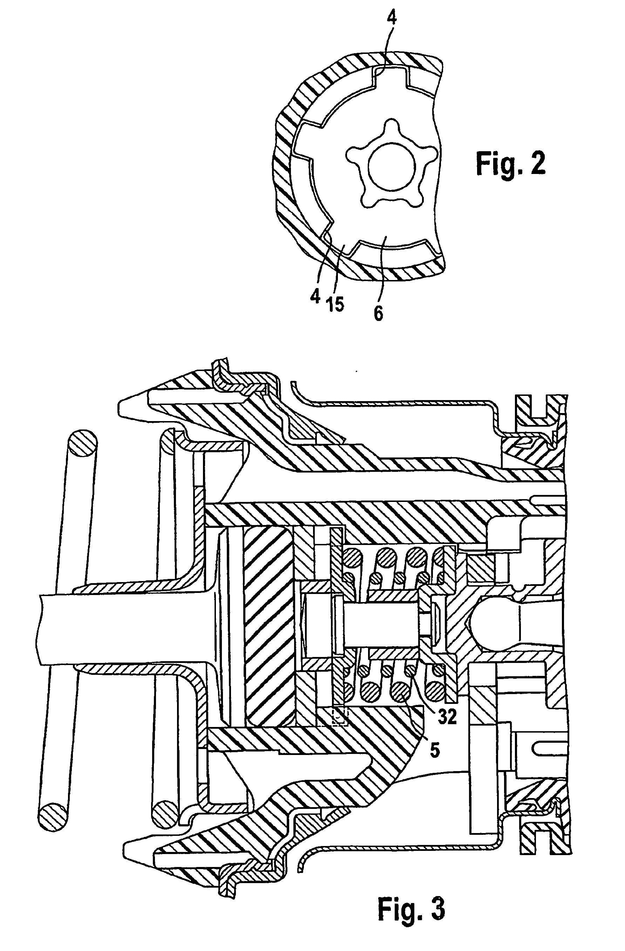

Für die vorliegende Erfindung ist die Führung des zweiten Halteelementes 6 in dem Steuergehäuse 8 wichtig. Diese Führung geschieht mit Hilfe von Führungsnuten 4, die in die innere Mantelfläche der zweiten Bohrung 27 über den Umfang der Bohrung verteilt eingearbeitet sind. Zu Zwecken der Führung ist das zweite Halteelement 6 mit entsprechend ausgestalteten Führungsansätzen 15 versehen, die in die Nuten 4 eingreifen wie dies in Fig. 2 dargestellt ist. Eine Endwand 11 in jeder Nut bildet einen Anschlag für die Führungsansätze 15, so daß bei einem Anschlag der Führungsansätze 15 an der jeweiligen Endwand 11 eine, auf das zweite Halteelement 6 in Fig. 1 nach rechts gerichtete Kraft durch das Steuergehäuses 8 aufgenommen wird.Die weiteren, in Fig. 1 gezeigten Bauelemente, sind für die vorliegende Erfindung nicht wesentlich und werden daher ein dieser Stelle nicht näher beschrieben.

Die Arbeitsweise des Ausführungsbeispiels nach Fig. 1 ist wie folgt. Wird in der in Fig. 1 gezeigten Lage das Eingangsglied 22 in Fig. 1 nach links verschoben, so greifen das Druckstück 31 und der Schaltring 2 an dem Reaktionselement 7 an. Damit ist am Reaktionselement 7 eine Fläche d3 wirksam, während das Reaktionselement 7 zum Ausgangsglied 24 hin mit der Fläche d4 einwirkt. Durch das Verhältnis dieser beiden Flächen ist in diesem Arbeitszustand des Verstärkers dessen Verstärkungsverhältnis festgelegt. Dabei bewegen sich Schaltring und Druckstück 31 miteinander parallel, da die Feder 5 derart steif ist, daß sie in diesen Bereich der auf dass Eingangsglied 22 wirkenden Eingangskraft nicht nachgibt.

Mit wachsender Eingangskraft wird die von dem Ausgangsglied 24 ausgeübte, in Richtung Eingang wirkende, Kraft immer größer, wobei auch die auf den Schaltring 2 wirkende anteilige Kraft wächst. Diese Kraft wird schließlich so groß, daß das zweite Halteelement 6, von dem Anschlag 12 durch die von dem Schaltring 2 ausgeübte Kraft, angehoben wird, da die Feder 5 beginnt nachzugeben. Es verschiebt sich also der Schaltring 2 gegenüber dem Druckstücke 31 in Fig. 1 nach rechts. Diese Verschiebung steigt mit wachsender Eingangskraft an, bis schließlich die Führungsansätze 15 an der zugehörigen Endwand 11 anschlagen. Die Feder 5 ist dabei zusammen gedrückt und entsprechend verkürzt. Bei einem weiteren Anstieg der Eingangskraft werden die zusätzlichen in Richtung Eingang auf den Schaltring 2 wirkenden Kräfte nur noch von der Endwand 11 und damit dem Steuergehäuse 8 aufgenommen. Ab diesem Zeitpunkt wirkt als rückwirkende Kraft des Reaktionselementes 7 nur noch die Fläche d2 auf das Eingangsglied 22. Die von den wirksamen Flächen abhängige Verstärkung des Verstärkers ergibt sich somit aus dem Verhältnis der Flächen d4 zu d2. Durch das Anschlagen der Führungsansätze 15 an der Endwand 11 wird somit eine sprunghafte Erhöhung der Verstärkung des Verstärkers erreicht.

Bei nachlassender Eingangskraft laufen die beschriebenen Vorgänge in umgekehrter Richtung ab. Das Druckstück 13 wandert gegenüber dem festgehaltenen Schaltring 2 in Fig. 1 soweit nach rechts, bis schließlich die Feder 5 über das zweite Halteelement 6 den Schaltring 2 nach links weg von der Endwand 11 verschiebt. Damit wirkt der Schaltring 2 wieder in Richtung Eingang und überträgt eine entsprechende Gegenkraft über die Feder 5 auf das Eingangsglied 22. Das Verstärkungsverhältnis hat somit um einen, dem Zuwachs der rückwirkende Kraft entsprechenden, Betrag abgenommen.

Das in Fig. 3 gezeigte zweite Ausführungsbeispiel ist gegenüber dem Ausführungsbeispiel nach Fig. 1 nur geringfügig verändert. Der wesentliche Unterschied besteht darin, dass statt einer Feder 5 zwei zueinander parallele geschaltete Federn 5 und 32 angewendet werden. Die innen sitzende zweite Feder 32 hat eine gegenüber der ersten Feder 5 geringere Federkonstante. Auf diese Weise läßt sich auf gleichem Raum eine größere und genauer dosierbare Federkraft einrichten.

## Patentansprüche

1. Übertragungseinrichtung für die Bremskraft eines Bremskraftverstärkers mit einem elastischen Reaktionselement (7), einem Eingangsglied (9), welches über eine Eingangswirkfläche auf das Reaktionselement (7) einwirkt und mit einem Ausgangsglied (10), welches über eine Ausgangswirkfläche (d4) auf das Reaktionselement (7) einwirkt, wobei zumindest ein Teil (d4 - d3) der auf die Ausgangswirkfläche (d4) ausgeübten Kraft von dem Steuergehäuse (8) des Bremskraftverstärkers aufgenommen wird und wobei Änderungsmittel vorgesehen sind, durch welche das durch das Verhältnis der Wirkflächen (d2, d4 bzw.d1) bestimmte Kraftübersetzungsverhältnis zwischen Eingangsglied (9) und Ausgangsglied (10) in Abhängigkeit von den auf das Reaktionselement (7) über die Wirkflächen, ausgeübten Kräften bzw. die hierdurch bedingte Deformation des Reaktionselementes (7) geändert wird, wobei eingangsseitig ein Teil (d3 - d2) der Fläche des Reaktionselementes (7) über einen Schaltring (2) und über ein Federelement an dem Eingangsglied (9) abgestützt ist, wobei bei wachsender, auf das Reaktionselement (7) ausgeübter Kraft der Schaltring (2) gegen die Kraft des Federelementes (3,5,6) zu einem Anschlag (11) an dem Steuergehäuse (8) hin verschoben wird, und an diesem angreift, und damit die Eingangswirkfläche(d2) verkleinert, d.g., d. das Federelement ein gefesseltes Federpaket (3,5,6) ist das mit einer Feder (5) versehen ist, welche zwischen zwei zueinander beweglichen Halteelementen (3,6) unter Vorspannung eingespannt ist, welche in ihrem maximalen Abstand zueinander durch ein Anschlagelement (12) begrenzt sind, wobei der Schaltring (2) als auswechselbares, loses Bauelement ausgeführt, und mit seiner äußeren Mantelfläche (d3) durch die innere Mantelfläche eines radialen Gehäuse-Vorsprungs (1) des Steuergehäuses (8) geführt ist, welcher einen Teil (d4-d3) der von dem Reaktionselement (7) axial zur Eingangsseite hin ausgeübten Kräfte aufnimmt, und wobei die durch den Schaltring (2) von dem Reaktionselement (7) aufgenommenen Kräfte von dem zweiten der beiden Halteelemente (6) über die Feder (5) auf das erste der beiden Halteelemente (3) solange übertragen werden, bis das zweite Halteelement (6) an dem Steuergehäuse (8) anschlägt.

2. Übertragungseinrichtung nach Anspruch 1 **dadurch gekennzeichnet, daß** das erste der beiden Halteelemente (3) an dem Eingangsglied (9) anliegt und einen Ansatz (13) für das Eingangsglied (9) bildet, welcher auf das Reaktionselement (7) einwirken kann, und weiterhin mit einem Anschlag (12) gegenüber dem zweiten Halteelement (6) versehen ist, welcher das Anschlagelement bildet.

3. Übertragungseinrichtung nach einem der vorangegangenen Ansprüche, **dadurch gekennzeichnet, dass** der Schaltring (2) mit seiner inneren Mantelfläche durch eine äußere Mantelfläche (d2) des Ansatzes (13) geführt ist.

4. Übertragungseinrichtung nach Anspruch 3, **dadurch gekennzeichnet, daß** die von dem Reaktionselement (7) direkt in das Steuergehäuse (8) in Eingangsrichtung eingeleiteten Kräfte auf einen in Eingangsrichtung gegen das Steuergehäuse (8) fixierten Ring (1) übertragen werden.

5. Übertragungseinrichtung nach Anspruch 3 oder 4, **dadurch gekennzeichnet, dass** das zweite Halteelement (6) mit radialen zweiten Führungsansätzen (15) versehen ist, welche in zugeordneten zweiten Führungsnuten (4) im Steuergehäuse (8) axial geführt sind, wobei die Endwand (11) der zweiten Führungsnuten (4) den axialen Anschlag im Steuergehäuse (8) bildet.

6. Übertragungseinrichtung nach einem der vorangegangenen Ansprüche, **dadurch gekennzeichnet, dass** das Federelement (3,5,6,14) mit zwei zueinander konzentrisch angeordneten Spiralfedern (5,14) versehen ist.

7. Übertragungseinrichtung nach einem der Ansprüche 4 bis 9 **dadurch gekennzeichnet, dass** der Ansatz (13) an das erste Halteelement (3) angenietet ist.

8. Übertragungseinrichtung nach einem der vorangegangenen Ansprüche **dadurch gekennzeichnet, daß** sie in ein geregeltes Bremssystem eingefügt ist, bei dem insbesondere die Verteilung der Bremskräfte auf die einzelnen Räder oder Radgruppen in Abhängigkeit von dem Schlupf an dem jeweiligen Rad bzw. Rädern geregelt ist.

## Claims

1. Transmission device for the brake force of a brake force booster with an elastic reaction element (7), an input member (9) acting on the reaction element (7) by way of an input effective surface, and with an output member (10) acting on the reaction element (7) by way of an output effective surface (d4), with at least part (d4 - d3) of the force exerted on the output effective surface (d4) being taken up by the control housing (8) of the brake force booster, and with modification means being provided that modify the force transmission ratio between input member (9) and output member (10) defined by the ratio of the effective surfaces (d2, d4 or d1) in dependence on the forces exerted on the reaction element (7) by way of the effective surfaces or the deformation of the reaction element (7) caused hereby, wherein, on the input side, a part (d3 - d2) of the surface of the reaction element (7) is supported on the input member (9) by way of a switching ring (2) and by way of a spring element and, with rising force applied to the reaction element (7), the switching ring (2) is displaced in opposition to the force of the spring element (3,5,6) towards a stop (11) on the control housing (8), and catches thereon, and thereby decreases the input effective surface (d2), **characterized in that** the spring element is a captivated spring assembly (3,5,6) which includes a spring (5) that is compressed with bias between two mutually movable retaining elements (3,6) which are limited in their maximum distance to each other by a stop element (12), with the switching ring (2) being designed as an exchangeable loose component and being guided with its external peripheral surface (d3) by the inside peripheral surface of a radial housing projection (1) of the control housing (8) which takes up part (d4-d3) of the forces exerted by the reaction element (7) axially towards the input side, and with the forces which the switching ring (2) takes up from the reaction element (7) being transmitted by the second of the two retaining elements (6) by way of spring (5) onto the first of the two retaining elements (3) until the second retaining element (6) abuts on the control housing (8).

2. Transmission device as claimed in claim 1, **characterized in that** the first of the two retaining elements (3) bears against the input member (9) and forms a projection (13) for the input member (9) that can act on the reaction element (7), and further includes a stop (12) that forms the stop element in relation to the second retaining element (6).

3. Transmission device as claimed in any one of the preceding claims, **characterized in that** the switching ring (2) is guided with its inside peripheral surface by an external peripheral surface (d2) of the projection (13).

4. Transmission device as claimed in claim 3, **characterized in that** the forces directly introduced by the reaction element (7) in the input direction into the control housing (8) are transmitted onto a ring (1) fixed against the control housing (8) in the input direction.

5. Transmission device as claimed in claim 3 or 4, **characterized in that** the second retaining element (6) includes radial second guiding projections (15) that are axially guided in associated second guiding grooves (4) in the control housing (8), with the end wall (11) of the second guiding grooves (4) forming the axial stop in the control housing (8).

6. Transmission device as claimed in any one of the preceding claims, **characterized in that** the spring element (3, 5, 6, 14) includes two spiral springs (5, 14) arranged concentrically relative to each other.

7. Transmission device as claimed in any one of claims 4 to 9, **characterized in that** the projection (13) is riveted to the first retaining element (3).

8. Transmission device as claimed in any one of the preceding claims, **characterized in that** said device is mounted into a controlled brake system wherein in particular the distribution of the brake forces to the individual wheels or wheel groups is controlled in dependence on the slip at the respective wheel or wheels.

## Revendications

1. Dispositif de transmission de la force de freinage d'un servo-frein comportant un élément de réaction élastique (7), un organe d'entrée (9) qui agit sur l'élément de réaction (7) par une surface active d'entrée, et comportant un organe de sortie (10) qui agit sur l'élément de réaction (7) par une surface active de sortie (d4), une partie (d4-d3) au moins de la force exercée sur la surface active de sortie (d4) étant absorbée par le boîtier de commande (8) du servo-frein et des moyens de variation étant prévus par lesquels on fait varier le rapport de transmission de la force, determiné par le rapport des surfaces actives (d2, d4 ou d1), entre l'organe d'entrée (9) et l'organe de sortie (10), en fonction des forces exercées sur l'élément de réaction (7) par les surfaces actives, ou la déformation en résultant de l'élément de réaction (7), côte entrée une partie (d3-d2) de la surface de l'élément de réaction (7) étant soutenue, par un anneau de commande (2) et par un élément à ressort, sur l'organe d'entrée (9), l'anneau de commande (2) étant déplacé, à l'encontre de la force de l'élément à ressort (3, 5, 6), vers une butée (11) du boîtier de commande (8) et agissant sur celui-ci, lorsque la force exercée sur l'élément de réaction (7) augmente, et réduisant ainsi la surface active d'entrée (d2) **caractérisé en ce que** l'élément à ressort est un paquet de ressorts (3, 5, 6) attaché qui est pourvu d'un ressort (5) qui est serré avec précontrainte entre deux éléments de retenue (3, 6) déployables l'un par rapport à l'autre, lesquels sont limités dans leur écartement maximal par un élément de butée (12), l'anneau de commande (2) étant réalisé en tant que composant séparé, échangeable, et étant guidé, sur sa surface d'enveloppe extérieure (d3), par la surface d'enveloppe intérieure d'une saillie radiale (1) du boîtier de commande (8), qui absorbe une partie (d4-d3) des forces exercées par l'élément de réaction (7), axialement vers le côté entrée, et les forces absorbées, à travers l'anneau de commande (2), par l'élément de réaction (7), étant transmises par le deuxième des deux éléments de retenue (6), à travers le ressort (5), au premier des deux éléments de retenue (3) jusqu'à ce que le deuxième élément de retenue (6) vienne buter contre le boîtier de commande (8).

2. Dispositif de transmission selon la revendication 1, **caractérisé en ce que** le premier des deux éléments de retenue (3) s'applique contre l'organe d'entrée (9) et forme un talon (13) pour l'organe d'entrée (9) qui peut agir sur l'élément de réaction (7), et est pourvu en outre d'une butée (12) par rapport au deuxième élément de retenue (6), qui forme l'élément de butée.

3. Dispositif de transmission selon l'une des revendications précédentes, **caractérisé en ce que** l'anneau de commande (2) est guidé sur sa surface d'enveloppe intérieure, par une surface d'enveloppe extérieure (d2) du talon (13).

4. Dispositif de transmission selon la revendication 3, **caractérisé en ce que** les forces introduites directement dans le boîtier de commande (8), dans le sens d'entrée, par l'élément de réaction (7), sont transmises à un anneau (1) fixé, dans le sens d'entrée, contre le boîtier de commande (8).

5. Dispositif de transmission selon la revendication 3 ou 4, **caractérisé en ce que** le deuxième élément de retenue (6) est pourvu de deuxièmes talons de guidage (15) radiaux qui sont guidés axialement dans des deuxièmes rainures de guidage (4) associées du boîtier de commande (8), la paroi terminale (11) des deuxièmes rainures de guidage (4) formant la butée axiale dans le boîtier de commande (8).

6. Dispositif de transmission selon l'une des revendications précédentes, **caractérisé en ce que** l'élément à ressort (3, 5, 6, 14) est pourvu de deux ressorts helicoïdaux (5, 14) disposés concentriquement l'un à l'autre.

7. Dispositif de transmission selon l'une des revendications 4 à 9, **caractérisé en ce que** le talon (13) est riveté sur le premier élément de retenue (3).

8. Dispositif de transmission selon l'une des revendications précédentes, **caractérisé en ce qu'**il est inséré dans un systeme de freinage à régulation, dans lequel en particulier la répartition des forces de freinage entre les différentes roues ou groupes de roues est régulée en fonction du glissement sur la roue ou les roues concernées.
